# EUROPÄISCHE PATENTSCHRIFT

(11) **EP 2 351 185 B1**
(45) Veröffentlichungstag und Bekanntmachung des Hinweises auf die Patenterteilung: **08.06.2016**
(21) Anmeldenummer: 09763894.4
(22) Anmeldetag: 09.11.2009
(51) Int. Cl.: H02J 7/02, B60L 5/00, B60L 11/18, H02J 5/00, B60C 1/00

(54) **EINRICHTUNG ZUR ÜBERTRAGUNG ELEKTRISCHER ENERGIE**
DEVICE FOR TRANSMITTING ELECTRICAL ENERGY
ÉQUIPEMENT POUR LE TRANSFERT D'ÉNERGIE ÉLECTRIQUE

(30) Priorität: 18.11.2008 DE 202008015230 U; 08.09.2009 DE 202009012151 U
(43) Veröffentlichungstag der Anmeldung: 03.08.2011
(73) Patentinhaber: Stemmann-Technik GmbH, 48465 Schüttorf (DE)
(72) Erfinder: HÜBNER, Burkhard, 12524 Berlin (DE)
(74) Vertreter: Ksoll, Peter
(86) Internationale Anmeldenummer: PCT/EP2009/064824
(87) Internationale Veröffentlichungsnummer: WO 2010/057799

(56) Entgegenhaltungen:
- EP-A- 0 289 868
- DE-A1- 4 236 286
- DE-A1- 19 824 290
- US-B1- 6 803 744

## Beschreibung

Die Erfindung betrifft eine Einrichtung zur induktiven Übertragung elektrischer Energie zu oder von einem mobilen, im Stillstand oder in Bewegung auf einer Fahrbahn oder Schiene befindlichen Objekt, das einen Verbraucher und/oder einen Energiespeicher aufweist.

In vielen Bereichen der Industrie und Logistik, beispielsweise bei Produktionsanlagen oder mobilen Objekten wie Eisenbahnen, Flurfördergeräten, Elektromobilen, Krananlagen, Verfahrbrücken oder dgl., aber auch bei LKW-Anhängern, Waggons oder Kühlcontainern, ist eine Versorgung mit elektrischer Energie erforderlich, die üblicherweise mit Hilfe von Schleifkontakten und Energieketten oder mittels Batterie und Ladekabel bereitgestellt wird. Neben mangelnder Bewegungsfreiheit und Stillstandszeiten ist diese Art der Energieübertragung aufgrund ihrer Störanfälligkeit und des hohen Wartungsaufwandes nachteilig. Darüber hinaus sind auch - beispielsweise aus der EP 1337001 B1 oder der DE 198 24 290 A1 und DE 4236340 C2 - Verfahren zur induktiven, berührungslosen Energieübertragung durch Transformatoren mit Luftspalt bekannt, bei denen die zuvor erwähnten Nachteile nicht auftreten und mit denen sich auch Leistungen bis in den Megawattbereich wartungsfrei übertragen lassen. Abgesehen von dem nach oben begrenzten Wirkungsgrad ist die Nutzung der induktiven Energieübertragung aufgrund des konstant zu haltenden geringen Luftspaltes und den hohen Anforderungen an die Beschaffenheit und Sauberkeit des Untergrundes mit einem erheblichen konstruktiven Aufwand verbunden.

Im Individualverkehr ist die Entwicklung auf Elektromobile gerichtet, die mittels Akkumulatoren mit elektrischer Energie versorgt werden. Die Energieübertragung zum Laden der Akkumulatoren erfolgt bekanntermaßen im Stillstand des Fahrzeugs unter Nutzung bekannter Steckerlösungen an festen Ladestationen, die aufgrund der langen Ladedauer und der damit verbundenen Wartezeit für den Nutzer nachteilig sind. Auch das Austauschen entladener Akkumulatoren ist mit einem erheblichen Aufwand verbunden. Zudem sind die Kosten für die Akkumulatoren und deren Gewicht hoch.

Der Erfindung liegt die Aufgabe zugrunde, eine Einrichtung zur induktiven Übertragung elektrischer Energie auf mobile Objekte zu entwickeln, die konstruktiv einfach und wartungsarm ausgebildet ist und im Ruhezustand oder in der Bewegung des mobilen Objekts auch auf verunreinigten Fahrwegen eine verlustarme und schnelle Energieübertragung gewährleistet.

Erfindungsgemäß wird die Aufgabe mit einer gemäß den Merkmalen des Patentanspruchs 1 ausgebildeten Vorrichtung gelöst. Vorteilhafte oder zweckmäßige Weiterbildungen der Erfindung sind Gegenstand der Unteransprüche.

Der Grundgedanke der Erfindung besteht in der induktiven Übertragung elektrischer Energie zu oder von einem mobilen, im Stillstand oder in Bewegung auf einer Fahrbahn oder Schiene befindlichen Objekt, das einen Verbraucher, beispielsweise einen Elektromotor oder ein Kühlaggregat, und/oder einen Energiespeicher aufweist, mit Hilfe eines der Fahrbahn oder Schiene zugeordneten Bodeninduktors sowie eines an dem beweglichen Objekt angebrachten, den Bodeninduktor berührenden induktiven Rades, das heißt, eines einen Magnetfluss aufnehmenden oder abgebenden Rades. Der Bodeninduktor umfasst eine Vielzahl von in der Fahrbahn oder entlang einer Schiene angeordneten, an eine Stromquelle angeschlossenen ersten Induktionsspulen mit einem magnetisch leitfähigen Eisenkern zur Erzeugung eines zu dem beweglichen Objekt gerichteten Magnetfeldes. Das induktive Rad umfasst eine feststehende zweite Induktionsspule mit einem magnetisch leitfähigen Eisenkern und beidseitig mit diesem verbundene, auf die Fahrbahn oder Schiene gerichtete, magnetisch leitfähige Radscheiben. Den Radscheiben ist zur Kontaktierung der Fahrbahn oder Schiene und zur Vermeidung des Luftspaltes und damit zur Gewährleistung eines verlustarmen Magnetflusses eine mit der Bewegung des Objekts rotierende elastische, magnetisch leitfähige Bereifung zugeordnet. Mit der vorgeschlagenen Einrichtung ist eine verlustarme, bequeme, robuste und schnelle induktive Energieübertragung zwischen einer Fahrbahn oder Schiene und einem darauf befindlichen beweglichen Objekt gewährleistet, und zwar in beiden Richtungen im Stillstand und in der Bewegung des Objekts.

In einer ersten Ausführungsvariante sind die Radscheiben mit dem Eisenkern und der zweiten Induktionsspule feststehend an dem beweglichen Objekt gehalten, während die magnetisch leitfähige Bereifung an einer um die zweite Induktionsspule rotierenden Felge angebracht ist. Dabei wird die auf der Fahrbahn plattgedrückte Bereifung beidseitig in den zwischen den Radscheiben und der Fahrbahn (Schiene) verbleibenden Luftspalt gedrückt, um so den Luftspalt zu schließen und einen verlustarmen Magnetfluss zwischen der ersten Induktionsspule des Bodeninduktors und der zweiten Induktionsspule des induktiven Rades zu erzielen.

Gemäß einer noch anderen Ausführungsform des induktiven Rades sind als Vollkreis ausgebildete Radscheiben zusammen mit dem Eisenkern drehbar an dem beweglichen Objekt gehalten und die magnetisch leitfähige Bereifung ist jeweils am Außenumfang der Radscheiben angebracht, während die zweite Induktionsspule über ein Halteelement fest mit dem beweglichen Objekt verbunden ist.

In Ausgestaltung der Erfindung besteht die Bereifung aus einem magnetisch leitfähigen Elastomer.

Der Bodeninduktor kann im oder auf dem Boden, aber auch in oder an einer Wand oder Decke angeordnet sein und entsprechend Fahrbahn- oder Schienenverlauf in beliebiger Richtung verlaufen.

Gemäß einem weiteren Merkmal der Erfindung ist den Induktionsspulen des Bodeninduktors jeweils ein Sensor zum Erfassen eines beweglichen Objekts zugeordnet, um nur diejenige Induktionsspule mit dem Stromnetz zu verbinden, über der sich das bewegliche Objekt gerade befindet.

In weiterer Ausbildung der Erfindung umfasst der Bodeninduktor zwei oder mehrere, im Abstand parallel angeordnete Längsschienen aus magnetisch leitendem Material, die durch Querstege, auf denen sich die Induktionsspulen befinden, verbunden sind. Der Bodeninduktor kann als Doppelschieneninduktor, der eine Vielzahl von hintereinander angeordneten Segmenten, jeweils bestehend aus zwei Längsschienen und einem diese verbindenden, die erste Induktionsspule aufnehmenden Quersteg, umfasst, oder als modular aufgebauter großflächiger Gitterinduktor, bestehend aus einer Vielzahl parallel angeordneter, durch mit einer Induktorspule bestückte Querstege verbundene Längsschienen, ausgebildet sein.

In einer bevorzugten Anwendungsvariante ist das bewegliche Objekt ein mittels Energiespeichern betriebenes Elektromobil, an dem das induktive Rad befestigt ist und zum Nachladen der Akkumulatoren vorübergehend auf einen als Gitterinduktor ausgebildeten Langsamfahr- oder Haltebereich der Fahrbahn oder eines Parkplatzes absenkbar befestigt ist. Die Anwendung des erfindungsgemäßen Energieübertragungssystems bei Elektromobilen ist wegen des einfachen, bequemen und schnellen Nachladens und wegen der Gewichts- und Kosteneinsparung für die Akkumulatoren besonders vorteilhaft.

In Ausgestaltung der Erfindung kann das vorübergehende Absenken des induktiven Rades bei Automobilen durch Ändern des Reifendrucks oder der Achslage erfolgen. In weiterer Ausgestaltung der Erfindung kann das über eine Montageplatte an dem Elektromobil gehaltene induktive Rad auch mittels einer Ausklappmechanik auf die mit einem Induktorgitter ausgebildete Fahrbahn abgesenkt werden. Ausführungsbeispiele der Erfindung werden anhand der Zeichnung näher erläutert. Es zeigen:
- Fig. 1: eine Prinzipdarstellung einer Einrichtung zur induktiven Übertragung elektrischer Energie zu einem mobilen Objekt mit einem an diesem angebrachten induktiven Rad;
- Fig. 2: eine Schnittdarstellung der in Fig. 1 gezeigten Einrichtung;
- Fig. 3: eine Draufsicht auf einen aus in einer Reihe angeordneten Segmenten bestehenden Doppelschieneninduktor für schienengebundene bewegliche Objekte;
- Fig. 4a/b: eine Draufsicht und eine Vorderansicht eines in eine Fahrbahn integrierbaren Gitterinduktors zur Energieübertragung auf ein individuell verfahrbares Elektromobil, um Antriebsenergie zu liefern oder Energie zu übertragen und zu speichern;
- Fig. 5: ein auf einer Fahrbahn mit integriertem Gitterinduktor befindliches, individuell verfahrbares Elektrofahrzeug; und
- Fig. 6: eine von einem Fahrzeug an eine Fahrbahn anstellbare Einrichtung zur Übertragung elektrischer Energie nach Fig. 1.

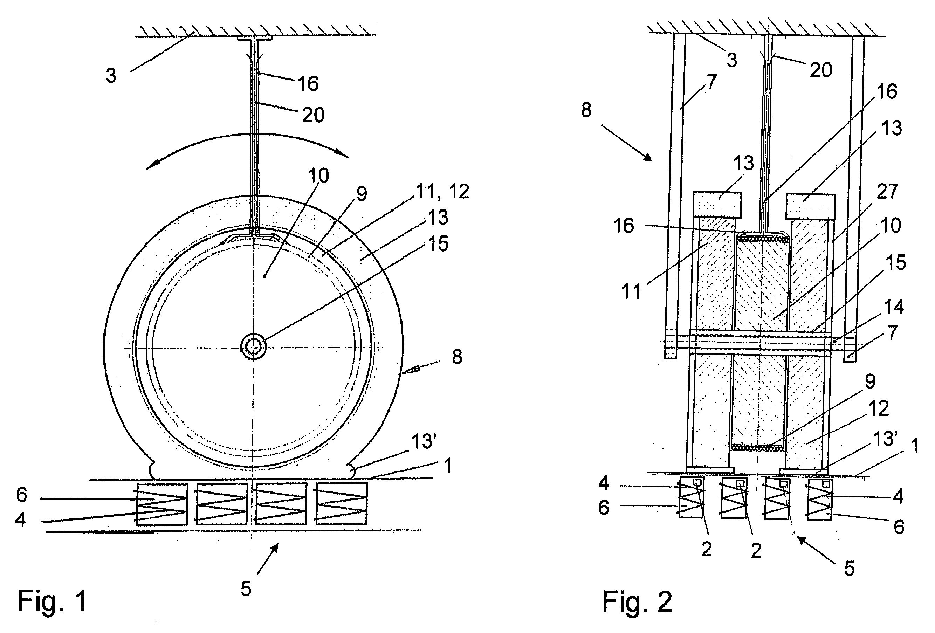

Wie die Figuren 1 und 2 zeigen, ist im Bereich einer Fahrbahn 1, auf der ein elektrisch betriebenes, bewegliches Objekt 3 verfahren werden soll, eine Vielzahl von um einen Eisenkern 6 gewickelten, über ein Energieversorgungsnetz an eine Wechselspannung im Niederfrequenzbereich angeschlossenen ersten Induktionsspulen 4 angeordnet, die in ihrer Gesamtheit einen Bodeninduktor 5 bilden und ein nach oben gerichtetes Magnetfeld erzeugen. Der Anschluss der ersten Induktionsspulen 4 entlang des Fahrweges an das Stromnetz wird in Abhängigkeit von dem sich auf der Fahrbahn 1 befindlichen beweglichen Objekt 3 gesteuert, das heißt, es werden immer nur die im Bereich des beweglichen Objekts 3 befindlichen Induktionsspulen 4 zugeschaltet. Zur Erkennung des beweglichen Objekts 3 sind den Induktionsspulen 4 Sensoren 2 zugeordnet.

Das in den Figuren 1 und 2 nur angedeutete bewegliche Objekt 3 weist ein an einer Halterung 7 um eine Radachse 14 drehbar gelagertes induktives Rad 8 mit einer Lagerbuchse 15 auf, das einen von einer zweiten Induktionsspule 9 umgebenen, magnetisch leitfähigen - geblechten - Eisenkern 10 mit diesem an jeder Seite zugeordneter magnetisch leitfähiger - geblechter - Radscheibe 11 und 12 umfasst. An der Außenfläche der Radscheiben 11, 12 ist eine nichtmagnetische Abdeckscheibe 17 angebracht. Die zweite Induktionsspule 9 ist an einem mit dem beweglichen Objekt 3 verbundenen Halteelement 16 fixiert. Die Außenumfangsfläche des induktiven Rades 8 wird durch eine aus einem magnetisch leitfähigen Elastomer bestehende elastische Bereifung 13 gebildet, die die Fahrbahn 1 kontaktiert und auf dieser abrollt und dabei soweit plattgedrückt wird bzw. sich flächig verbreitert (platter Reifen 13'), dass zwischen dem in den Fahrweg integrierten Bodeninduktor 5 und den magnetisch leitfähigen Radscheiben 11, 12 kein Luftspalt verbleibt. Zwischen den ersten Induktionsspulen 4 des Bodeninduktors 5 und der zweiten Induktionsspule 9 des induktiven Rades 8 wird über das magnetisch leitfähige Elastomer der Bereifung 13 und die beiderseitigen magnetisch leitfähigen Radscheiben 11, 12 verlustarm magnetische Energie, die über die Induktionsspule 9 mit hohem Wirkungsgrad in elektrische Energie umgewandelt wird. Die auf diese Art induktiv übertragene elektrische Energie wird über eine Spulenableitung 20 und Gleichrichter einem an dem beweglichen Objekt 3 vorgesehenen Verbraucher oder kapazitiven Energiespeichern (jeweils nicht dargestellt) zugeführt. In der zuvor geschilderten Ausführungsvariante wird das induktive Rad 8 unmittelbar durch die in der Halterung 7 drehbar gelagerten, magnetisch leitfähigen Radscheiben 11, 12 mit an deren Umfangsfläche vorgesehener magnetisch leitfähiger Bereifung 13 gebildet.

Die Erfindung ist nicht auf die zuvor beispielhaft beschriebene Ausführungsform einer Einrichtung zur induktiven Übertragung elektrischer Energie zu oder von einem mobilen Objekt 3 beschränkt. Ausgehend von dem Grundgedanken der Erfindung, eine induktive Energieübertragung zwischen einem festen Bodeninduktor 5 und einem an dem beweglichen Objekt angebrachten induktiven Rad 8 aus magnetisch leitfähigen Radscheiben 11, 12 und diesen zugeordnetem magnetisch leitfähigem Elastomer zur Erzielung eines luftspaltfreien, verlustarmen Magnetflusses zu bewirken, ist es jedoch auch denkbar, die Radscheiben fest anzuordnen und das diesen zur Luftspaltunterdrückung zugeordnete magnetisch leitfähige Elastomer an einem mit der an dem beweglichen Objekt befestigten Halterung verbundenen Rad vorzusehen.

Mit der vorgeschlagenen Einrichtung kann elektrische Energie sowohl im Stillstand als auch in der Bewegung des beweglichen Objekts induktiv übertragen werden, und zwar in beiden Richtungen zwischen dem feststehenden Bodeninduktor und dem auf diesem verfahrbaren induktiven Rad. Die Einrichtung ist sowohl für schienengebundene bewegliche Objekte, beispielsweise Eisenbahnen oder ähnliche Fördermittel, als auch für nicht an einen vorgegebenen Fahrweg gebundene Objekte, beispielsweise den Individualverkehr mit Elektromobilen auf einer Fahrbahn geeignet. Dementsprechend ist der Bodeninduktor 5 entweder als an das induktive Rad 8 angepasster Doppelschieneninduktor 17 ausgebildet, auf dem das mit dem magnetisch leitenden Elastomer versehene Rad, hier die Radscheiben 11, 12 mit der elastischen Bereifung 13, in Richtung des Schienenverlaufs abrollt, oder der Bodeninduktor 5 ist ein in eine Fahrbahn eingebundener oder als Matte ausgebildeter großflächiger Gitterinduktor 21, auf dem ein frei bewegliches Elektrofahrzeug während der Energieübertragung in beliebiger Richtung verfahren werden kann oder im Stillstand positioniert sein kann.

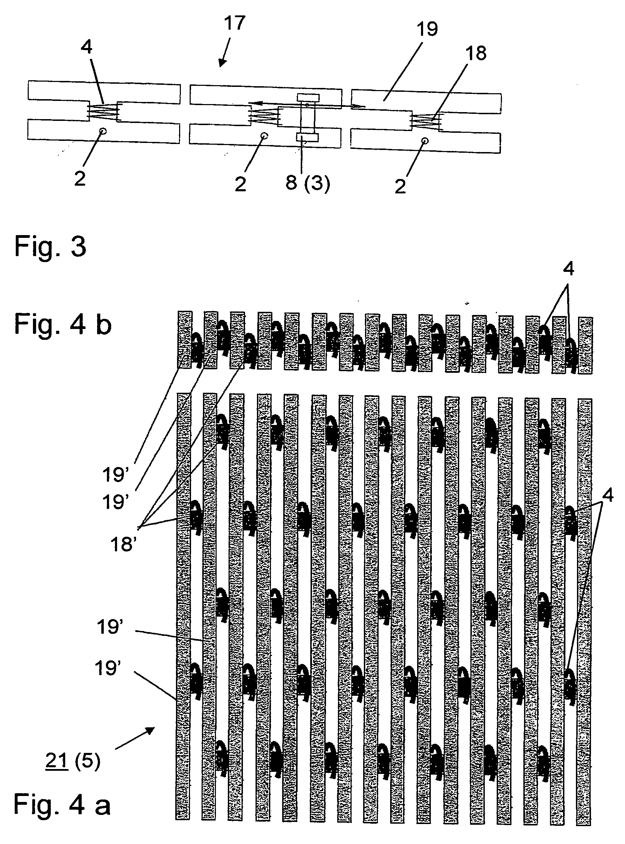

Fig. 3 zeigt eine Mehrzahl hintereinander angeordneter Segmente oder Module eines Doppelschieneninduktors 17, die entsprechend der Ausbildung des induktiven Rades 8 gemäß Fig. 1 und 2 jeweils aus zwei durch einen Quersteg 18 verbundenen Längsschienen 19 aus magnetisch leitfähigem Material sowie am Quersteg 18 angebrachten Induktionsspulen 4 bestehen. In Höhe der jeweiligen Induktionsspule 4 sind Sensoren 2 angeordnet, die ein über der Induktionsspule 4 befindliches bewegliches Objekt 3 erkennen, um den Anschluss der betreffenden ersten Induktionsspule 4 an das Stromnetz zu initiieren sowie die elektrische Energie zu einem Speicher oder Verbraucher des gerade über der Induktionsspule 4 positionierten beweglichen Objekts 3 induktiv zu übertragen.

Fig. 4a und b zeigt in einer Draufsicht und einer Vorderansicht einen für den Individualverkehr mit Elektromobilen ausgebildeten Gitterinduktor 21. Der Gitterinduktor 21 umfasst eine Vielzahl von im Abstand parallel zueinander angeordneten Längsschienen 19', die durch in Längsrichtung sowie in der Höhe zueinander versetzte Querstege 18' mit an diesen angeordneten - individuell zuschaltbaren - Induktionsspulen 4 untereinander verbunden sind. Die Längsschienen 19' und die Querstege 18' bestehen aus magnetisch leitfähigem Material. Der Gitterinduktor 21 ist aus mehreren hintereinander angeordneten Gitterinduktorabschnitten (nicht dargestellt) aufgebaut.

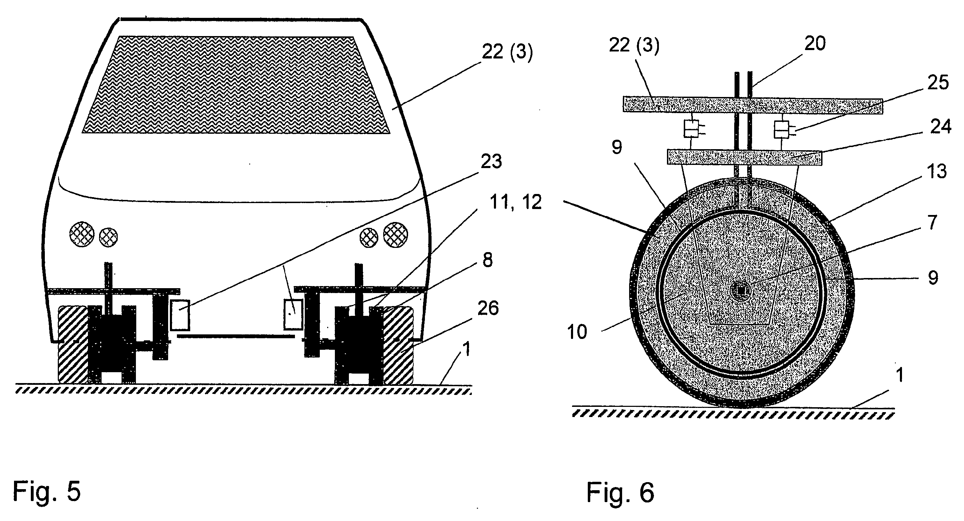

Ein spezielles Anwendungsgebiet der oben beschriebenen Einrichtung zur induktiven Energieübertragung sind Elektromobile, deren Nutzung durch das hohe Gewicht und die hohen Kosten für die Akkumulatoren und das aufwändige Laden eingeschränkt ist. Fig. 5 zeigt ein mit Akkumulatoren (nicht dargestellt) zur Bereitstellung der erforderlichen elektrischen Antriebsenergie ausgestattetes Elektromobil 22, dessen Rädern 23 ein gemäß den Figuren 1 und 2 ausgebildetes induktives Rad 8 zugeordnet ist. Das induktive Rad 8, das im normalen Fahrbetrieb die Fahrbahn 1 nicht kontaktiert, kann bei einem in oder auf dem Fahrbahnbelag vorgesehenen, als Gitterinduktor 21 ausgeführten Bodeninduktor 5 vorübergehend auf die Fahrbahn 1 abgesenkt werden, so dass bei an das Stromnetz angeschlossenen ersten Induktionsspulen 4 über die an die Fahrbahn 1 gedrückte elastische, magnetisch leitfähige Bereifung 13 eine Energieübertragung zum Antriebsmotor oder zu den Akkumulatoren des Elektromobils 22 erfolgen kann. Das Absenken des induktiven Rades auf die Fahrbahn 1 kann beispielsweise durch eine Luftdruckverringerung in den Fahrzeugreifen 26 oder durch eine Veränderung der Achslage in Bezug auf das induktive Rad 8 realisiert werden. Die Absenkung und lagerichtige Positionierung des induktiven Rades auf der Fahrbahn 1 erfolgt mit Hilfe von Steuerelementen 23. Durch die oben erwähnten, im Gitterinduktor 21 angeordneten Sensoren 2 wird die Position der Fahrzeugräder erfasst und die Bestromung der jeweiligen Spulen mit Wechselspannung im Niederfrequenzbereich gesteuert. Die Einschaltung erfolgt nur, wenn auch die Fahrzeugkennung erfasst ist, um eine korrekte Abrechnung des Energieverbrauchs vornehmen zu können. Fig. 6 zeigt noch ein unabhängig von den Fahrzeugrädern am Elektromobil 22 befestigtes induktives Rad 8 mit einer an diesem angebrachten Montageplatte 24, die über eine nicht näher erläuterte Ausklappmechanik 25 mit dem Elektromobil verbunden ist und ein Absenken des induktiven Rades 8 auf eine Fahrbahn 1 mit integriertem Gitterinduktor 21 bewirkt. Das am Elektromobil 22 angebrachte induktive Rad kann im Stillstand, beispielsweise auf Parkplätzen oder an Kreuzungen, oder in der Bewegung des Fahrzeugs, beispielsweise auf Langsamfahrstrecken in einem Wohngebiet, auf die mit dem Induktorgitter 21 versehene Fahrbahn 1 abgesenkt werden, um die Akkumulatoren zwischenzeitlich nachzuladen. Diese einfache und bequeme Art des Nachladens verringert die erforderliche Speicherkapazität und senkt das Gewicht und die Kosten der Akkumulatoren.

### Bezugszeichenliste

- 1: Fahrbahn
- 2: Sensoren
- 3: bewegliches Objekt
- 4: erste Induktionsspulen
- 5: Bodeninduktor (Gitterinduktor, Doppelschieneninduktor)
- 6: Eisenkern v. 4
- 7: Halterung
- 8: induktives Rad
- 9: zweite Induktionsspule
- 10: Eisenkern v. 9
- 11: Radscheibe
- 12: Radscheibe
- 13: magnetisch leitfähige Bereifung
- 13': platter Reifen
- 14: Radachse
- 15: Lagerbuchse
- 16: Halteelement v. 9
- 17: Doppelschieneninduktor
- 18, 18': Querstege
- 19, 19': Längsschienen
- 20: Spulenableitung
- 21: Gitterinduktor
- 22: Elektromobil
- 23: Steuerelemente
- 24: Montageplatte
- 25: Ausklappmechanik
- 26: Fahrzeugreifen v. 22
- 27: Abdeckscheibe

## Patentansprüche

1. Einrichtung zur induktiven Übertragung elektrischer Energie zu oder von einem mobilen, im Stillstand oder in Bewegung auf einer Fahrbahn oder Schiene befindlichen Objekt (3), das einen Verbraucher und/oder einen Energiespeicher aufweist, einen der Fahrbahn (1) oder Schiene zugeordneten Bodeninduktor (5), der eine Vielzahl von entlang der Fahrbahn oder Schiene angeordneten, an eine Stromquelle angeschlossenen ersten Induktionsspulen (4) mit einem magnetisch leitfähigen Eisenkern (6, 18, 19) zur Erzeugung eines zu dem beweglichen Objekt (3) gerichteten Magnetfeldes umfasst, und ein an dem beweglichen Objekt (3) angebrachtes, auf der Fahrbahn oder Schiene abrollendes induktives Rad (8) umfasst, **gekennzeichnet dadurch, dass** das Rad eine feststehende zweite Induktionsspule (9) mit einem magnetisch leitfähigen Eisenkern (10) und beidseitig mit diesem verbundenen, auf die Fahrbahn (1) oder Schiene gerichteten, magnetisch leitfähigen Radscheiben (11, 12) umfasst, wobei den Radscheiben zur luftspaltfreien Kontaktierung der Fahrbahn (1) und zur Gewährleistung eines verlustarmen Magnetflusses eine mit der Bewegung des Objekts (3) rotierende elastische, magnetisch leitfähige Bereifung (13) zugeordnet ist.

2. Einrichtung nach Anspruch 1, **dadurch gekennzeichnet, dass** die Radscheiben (11, 12) mit dem zugehörigen Eisenkern (10) feststehend an dem beweglichen Objekt (3) gehalten sind und die magnetisch leitfähige Bereifung (13) an einer um die zweite Induktionsspule (9) rotierenden Felge angebracht ist.

3. Einrichtung nach Anspruch 1, **dadurch gekennzeichnet, dass** die Radscheiben (11, 12) mit dem Eisenkern (10) drehbar an dem beweglichen Objekt (3) gehalten sind und die magnetisch leitfähige Bereifung (13) am Außenumfang der Radscheiben (11, 12) angebracht ist.

4. Einrichtung nach Anspruch 1, **dadurch gekennzeichnet, dass** die Bereifung (13) aus einem magnetisch leitfähigen Elastomer besteht.

5. Einrichtung nach Anspruch 1, **dadurch gekennzeichnet, dass** den ersten Induktionsspulen (4) des Bodeninduktors (5, 17) jeweils ein Sensor (2) zum Erfassen eines beweglichen Objekts (3) und zur Steuerung der Verbindung der betreffenden Induktionsspule (4) mit einem Stromnetz zugeordnet ist.

6. Einrichtung nach Anspruch 1, **dadurch gekennzeichnet, dass** der Bodeninduktor (5, 17) zwei oder mehrere, im Abstand parallel angeordnete Längsschienen (19, 19') aus magnetisch leitendem Material umfasst, die durch aus magnetisch leitfähigem Material bestehende Querstege (18, 18') mit diesen zugeordneten Induktionsspulen (4) verbunden sind.

7. Einrichtung nach Anspruch 6, **dadurch gekennzeichnet, dass** der Bodeninduktor (5) als Doppelschieneninduktor (17) ausgebildet ist, der eine Mehrzahl in Reihe angeordneter Segmente, jeweils bestehend aus zwei durch einen mit einer Induktorspule (4) versehenen Quersteg (18) verbundenen Längsschienen (19), umfasst, und der einer beliebig ausgerichteten Untergrundfläche zugeordnet ist.

8. Einrichtung nach Anspruch 6, **dadurch gekennzeichnet, dass** der Bodeninduktor (5) als flächiger, einer Fahrbahn- oder Parkfläche zugeordneter Gitterinduktor (21), bestehend aus einer Mehrzahl parallel angeordneter Längsschienen (19'), die durch zwischen den Längsschienen (19') versetzt angeordnete, mit Induktionsspulen (4) bestückte Querstege (18') verbunden sind, ausgebildet ist.

9. Einrichtung nach Anspruch 1, **dadurch gekennzeichnet, dass** das bewegliche Objekt ein mittels Akkumulatoren betriebenes Elektromobil (22) ist, an dem das induktive Rad (8) zum Nachladen der Akkumulatoren vorübergehend auf einen als Gitterinduktor (21) ausgebildeten Langsamfahr- oder Haltebereich der Fahrbahn (1) oder eines Parkplatzes absenkbar befestigt ist.

10. Einrichtung nach Anspruch 9, **dadurch gekennzeichnet, dass** das induktive Rad (8) den Fahrzeugreifen des Elektromobils (22) zugeordnet ist und durch Ändern des Reifendrucks oder der Achslage absenkbar ist.

11. Einrichtung nach Anspruch 9, **dadurch gekennzeichnet, dass** das induktive Rad (8) über eine Montageplatte (24) an dem Elektromobil (22) gehalten und mittels einer Ausklappmechanik (25) auf die mit einem Gitterinduktor (21) ausgebildete Fahrbahn (1) absenkbar ist.

## Claims

1. Device for the inductive transmission of electrical energy to or from a movable object (3) which is stationary or in motion on a roadway or rail and includes a load and/or an energy store, comprising a ground inductor (5) associated with the roadway (1) or rail and having a plurality of first induction coils (4) which are arranged along the roadway or rail and are connected to a power source and which have a magnetically conductive iron core (6, 18, 19) for generating a magnetic field directed to the movable object (3), and comprising an inductive wheel (8) mounted on the movable object (3) and rolling along the roadway or rail, **characterised in that** the wheel comprises a fixed second induction coil (9) with a magnetically conductive iron core (10) and magnetically conductive wheel discs (11, 12) connected to the iron core (10) on both sides and directed toward the roadway (1) or rail, the wheel discs being associated with elastic, magnetically conductive tyres (13) rotating with the motion of the object (3)in order to make contact with the roadway (1) without an air gap and to ensure a low-loss magnetic flux.

2. Device according to claim 1, **characterised in that** the wheel discs(11, 12) with the associated iron core (10) are fixedly held on the movable object (3), and the magnetically conductive tyres (13) are mounted on a rim rotating about the second induction coil (9).

3. Device according to claim 1, **characterised in that** the wheel discs(11, 12) with the iron core (10) are rotatably held on the movable object (3), and the magnetically conductive tyres(13) are mounted on the outer circumference of the wheel discs (11, 12).

4. Device according to claim 1, **characterised in that** the tyres(13) are made of a magnetically conductive elastomer.

5. Device according to claim 1, **characterised in that** each of the first induction coils (4) of the ground inductor (5, 17) has an associated sensor (2) for detecting a movable object (3) and for controlling the connection of the induction coil (4) in question with a power grid.

6. Device according to claim 1, **characterised in that** the ground inductor (5, 17) comprises two or more longitudinal rails (19, 19') arranged in spaced-apart parallel relationship and made of magnetically conductive material, which are connected by crosspieces (18, 18') made of magnetically conductive material having induction coils (4) associated therewith.

7. Device according to claim 6, **characterised in that** the ground inductor (5) is configured as a twin rail inductor (17) having a plurality of segments arranged in a row, each of the segments consisting of two longitudinal rails (19) connected by a crosspiece (18) provided with an induction coil (4), wherein the twin rail inductor is associated with a substrate surface of any desired alignment.

8. Device according to claim 6, **characterised in that** the ground inductor (5) is configured as flat grid inductor (21) which is associated with a roadway zone or parking zone and consists of a plurality of parallel longitudinal rails (19') which are connected by crosspieces (18') equipped with induction coils (4) and arranged in offset manner between the longitudinal rails (19').

9. Device according to claim 1, **characterised in that** the movable object is a battery-operated electric car (22) on which the inductive wheel (8) is attached such that it can be lowered temporarily onto a low-speed or stopping zone of the roadway (1) or parking lot, configured as a grid inductor (21), for recharging the batteries.

10. Device according to claim 9, **characterised in that** the inductive wheel (8) is associated with the vehicle tyres of the electric car (22) and can be lowered by changing the tyre pressure or the position of the axle.

11. Device according to claim 9, **characterised in that** the inductive wheel (8) is mounted on the electric car (22) by means of a mounting plate (24) and can be lowered onto the roadway (1) configured with a grid inductor (21) by means of a fold-out mechanism (25).

## Revendications

1. Dispositif de transfert inductif d'énergie électrique à ou d'un objet mobile (3) à l'arrêt ou en déplacement sur une voie de circulation ou un rail, lequel objet représente un utilisateur et/ou un accumulateur d'énergie, un inducteur au sol (5) affecté à la voie de circulation (1) ou au rail, qui comprend une pluralité de premières bobines d'inductance (4) connectées à une source de courant et aménagées le long de la voie de circulation ou du rail avec un noyau de fer magnétiquement conducteur (6, 18, 19) pour produire un champ magnétique dirigé vers l'objet mobile (3), et comprend une roue inductrice (8) montée sur l'objet mobile (3) et roulant sur la voie de circulation ou le rail, **caractérisé en ce que** la roue comprend une seconde bobine d'inductance fixe (9) avec un noyau de fer magnétiquement conducteur (10) et des disques de roue magnétiquement conducteurs (11, 12) connectés des deux côtés à celui-ci et centrés sur la voie de circulation (1) ou le rail, dans lequel un bandage élastique magnétiquement conducteur (13) tournant avec le déplacement de l'objet (3) est affecté aux disques de roue pour venir en contact avec la voie de circulation (1) sans discontinuité magnétique et garantir un flux magnétique pauvre en pertes.

2. Dispositif selon la revendication 1, **caractérisé en ce que** les disques de roue (11, 12) avec le noyau de fer associé (10) sont maintenus fixes sur l'objet mobile (3) et le bandage magnétiquement conducteur (13) est monté sur une jante tournant autour de la seconde bobine d'inductance (9).

3. Dispositif selon la revendication 1, **caractérisé en ce que** les disques de roue (11, 12) sont maintenus en rotation avec le noyau de fer (10) sur l'objet mobile (3) et le bandage magnétiquement conducteur (13) est monté sur la périphérie externe des disques de roue (11, 12).

4. Dispositif selon la revendication 1, **caractérisé en ce que** le bandage (13) est constitué d'un élastomère magnétiquement conducteur.

5. Dispositif selon la revendication 1, **caractérisé en ce qu'**un capteur (2) est affecté aux premières bobines d'inductance (4) de l'inducteur au sol (5, 17) respectivement pour détecter un objet mobile (3) et pour commander la connexion de la bobine d'inductance concernée (4) avec le réseau électrique.

6. Dispositif selon la revendication 1, **caractérisé en ce que** l'inducteur au sol (5, 17) comprend deux ou plus de rails longitudinaux (19, 19') aménagés parallèlement à distance et constitués d'un matériau magnétiquement conducteur, qui sont raccordés à des bobines d'inductance (4) qui leur sont affectées au moyen de traverses (18, 18') constituées d'un matériau magnétiquement conducteur.

7. Dispositif selon la revendication 6, **caractérisé en ce que** l'inducteur au sol (5) se présente sous la forme d'un inducteur à double rail (17) qui comprend une pluralité de segments aménagés en rangée, respectivement constitués de deux rails longitudinaux (19) raccordés par une traverse (18) pourvue d'une bobine d'inductance (4) et qui est affecté à une surface de sous-sol orientée de manière quelconque.

8. Dispositif selon la revendication 6, **caractérisé en ce que** l'inducteur au sol (5) se présente sous la forme d'un inducteur plat formant grille (21) affecté à une surface de voie de circulation ou à une aire de stationnement, constitué d'une pluralité de rails longitudinaux (19) aménagés parallèlement, qui sont connectés par des traverses (18') munies de bobines d'inductance (4) et aménagées décalées entre les rails longitudinaux (19').

9. Dispositif selon la revendication 1, **caractérisé en ce que** l'objet mobile est un véhicule électrique (22) entraîné au moyen d'accumulateurs, sur lequel véhicule la roue inductrice (8) est fixée de manière abaissable pour recharger les accumulateurs lors d'un passage dans une zone de ralentissement ou d'arrêt conformée en inducteur à grille (21) de la voie de circulation (1) ou d'une aire de stationnement.

10. Dispositif selon la revendication 9, **caractérisé en ce que** la roue inductrice (8) est affectée aux pneus du véhicule électrique (22) et peut être abaissée par modification de la pression des pneus ou de la position de l'essieu.

11. Dispositif selon la revendication 9, **caractérisé en ce que** la roue inductrice (8) est maintenue sur le véhicule électrique (22) via une plaque de montage (24) et peut être abaissée sur la voie de circulation (1) conformée avec un inducteur à grille (21) au moyen d'un mécanisme de basculement (25) .
